# EUROPEAN PATENT APPLICATION

(11) **EP 2 295 791 A2**
(43) Date of publication of application: **16.03.2011**
(21) Application number: 10172511.7
(22) Date of filing: 11.08.2010
(51) Int. Cl.: F03B 17/02

(54) **Electromechanical generator via the use of flotation energy**

(30) Priority: 11.08.2009 ES 200930590
(71) Applicant: Barrios Saelices, José, 28350 Ciempozuelos (ES)
(72) Inventor: Barrios Saelices, José, 28350 Ciempozuelos (ES)
(74) Representative: Arpe Fernandez, Manuel de

(57) **Abstract**

Electromagnetic generator for use of flotation energy.

The generator (1) is made up of a pool (2) filled to a filling level (N); a bedplate (3) with support bearings (30) of a shaft (4) mounted on a rotor (5) which has radial rotor arms (50) with a floating element (6) at its end which can be inflated with compressed air when said float passes submerged beneath the filling level (N) and can be deflated while said float passes above the aforementioned filling level, all of this with the rotation of the shaft; a pneumatic circuit (7) with a first compressor (74) for injecting air and a second compressor (77) for extracting the compressed air injected into the floats; control means (8) for governing the inflating and deflating of floats; a power device (9), coupled to the rotational shaft (4) and a multiplication device (11), said power device having respective kinetic outlets (90, 91, 92) connected respectively to the first and second compressor groups and to an electric alternator (12).

## Description

### FIELD AND PRIOR ART

The present invention relates in general to an electromechanical generator according to the characteristics of claim 1, using the flotation energy of floating elements which are cyclically submerged in the water.

Through document ES 2147071 A1, a generating device is known which is intended to use the hydrostatic pressure existing in the sea bed, at a considerable depth, such as for example at 400 metres, which consists of a plurality of tubes, of similar length, which arranged vertically are fixed to a floating platform at their upper ends, said upper ends being sensibly overhead with respect to the deck of the aforementioned platform and dynamos or alternators being established on said deck, suitably housed in a watertight box, connected to a turbine which undergoes a rotational movement due to the lift effect of the water inside the tubes.

This generator requires a floating platform which is expensive to build and maintain.

Through document ES 04540339 A1, a device is known which uses the energy of the waves with a buoy which floats or is fixed to the bottom of the sea. This device has a series of buoys which can rise and descend due to the swell, producing the movement of pistons which run through the inside of cylinders and act as air force pumps on a common collector for moving a turbine, and this moving a generator; additionally, the turbo-generator system is situated on land connected to the platform by means of an air duct which starts from the common collector.

### SUMMARY OF THE INVENTION

Starting from the above mentioned state of the art, the objective of the invention is proposed as the development of a generator of the type indicated at the beginning. It comes from the idea of using the lifting impulse experienced by inflatable floats submerged in a fluid to produce the rotational movement of a rotor which supplies kinetic outlets to, for example, move an electric alternator or other consumers.

According to the invention, this objective is reached through an electromagnetic generator by using flotation energy, said generator being **characterised in that** it comprises:
- a generation pool or pond to contain water with a preset filling level;
- supporting bedplate anchored to the bottom of the generating pool which has support bearings for a rotational shaft;
- a rotor of generally cylindrical configuration, mounted to rotate with the rotational shaft and on whose lateral surface are arranged, angularly equidistant, a plurality of rotor arms which extend radially with respect to said shaft and on the free end of each one of these arms is mounted, at least, a floating element which can be inflated with compressed air during a first work cycle or inflating cycle when said float passes, submerged, below the filling level of the generating pool and can be deflated during a second work cycle or deflating cycle while said float passes above the aforementioned filling level, all of this with the rotation of the shaft;

- a pneumatic circuit for inflating and deflating the respective floating elements which include a system of ducts for injecting/extracting compressed air, electrovalves for controlling the injection/extraction of compressed air, at least a first pneumatic compressor for injecting compressed air through reserve compressed air tanks and a second compressor group connected to the reserve tanks to extract the compressed air injected into the floats;
- timing means to govern the opening/closing of the electrovalves and the first and second pneumatic compressors during the aforementioned inflating and deflating cycles of the floats;
- a power device, in the form of a transfer case, coupled to the rotational shaft through a transmission box, such as a pulley box and a multiplication device, said power device having respective kinetic outlets respectively connected to the first and second compressor groups and to an electric alternator.

In accordance with an additional characteristic of the invention, the means for controlling the inflating/deflating cycles of the floating elements are provided with means for determining the position of the floating elements in relation to the filling level of the reaction pool, so that it is possible to adjust the initiation of the first work cycle or air injection cycle for inflating a respective floating element when said floating element is submerged, occupying a specific angle with respect to the vertical line of the bottom of the generating pool (2) and completing it with a total inflation when said floating element reaches the proximity of said vertical line during its rotation, and also so that it is possible to adjust the initiation of the second work cycle or deflating cycle when a respective floating element emerges through the filling line during its rotation and finishing it when said floating element begins to become submerged once again beneath the filling level during its rotation.

Also in accordance with an additional characteristic of the invention, it is advantageous if the angle with respect to the vertical line of the bottom of the generating pool wherein the inflating cycle of a respective floating element begins is chosen with a preferred value of between 15° and 30°.

Still according to an additional characteristic of the invention, it is advantageous to have two or more rows of rotor arms on the lateral surface of the rotor, with the adjacent double-rowed rotor arms displaced angularly between them.

### BRIEF DESCRIPTION OF THE DRAWINGS

Other characteristics and advantages of the invention will be clearer from the description that is continuing to be made with the help of the attached drawings, referring to a non-limitative example of embodiment wherein:

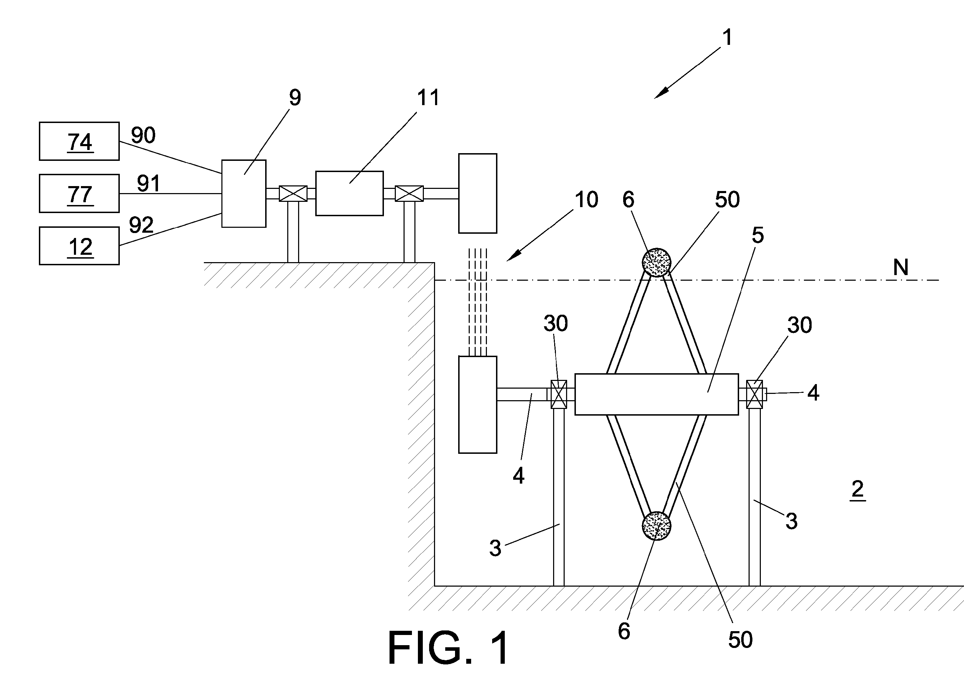

Figure 1 shows a functional block diagram of a generator according to the invention.

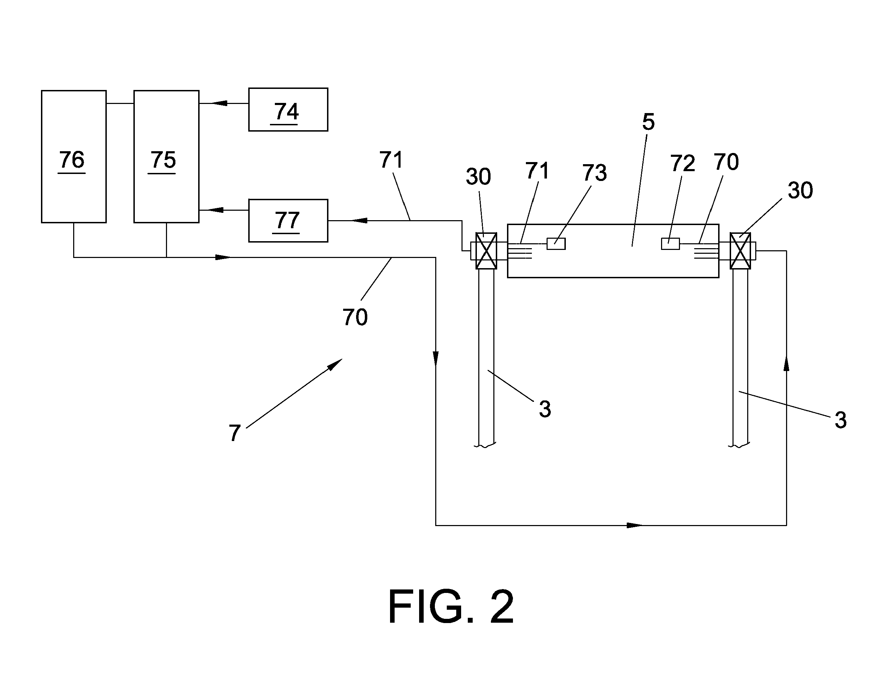

Figure 2 illustrates a block diagram of the pneumatic circuit of the generator according to figure 1.
Figure 3 shows a diagram relating to the control means of the pneumatic circuit according to figure 2.
Figure 4 schematically shows the rotor with floats of the generator according to figure 1.

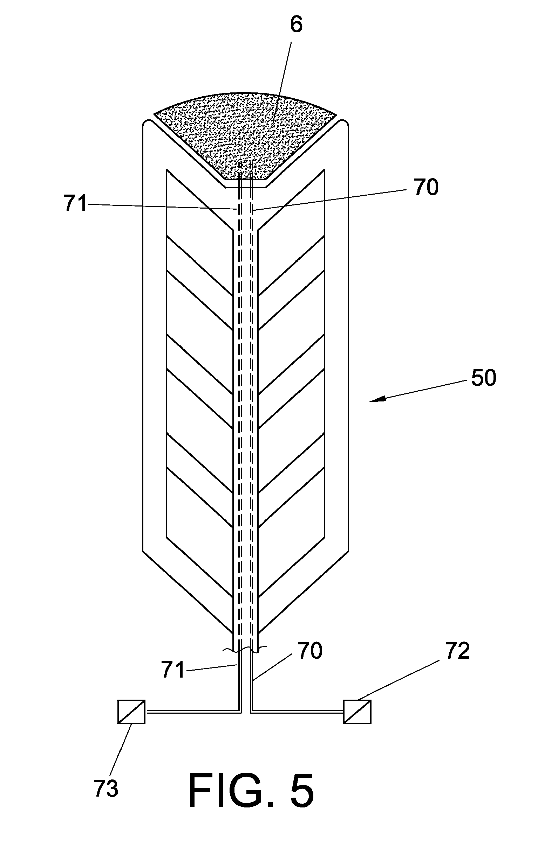

Figure 5 illustrates a close up view of one of the rotor arms according to figure 4.
Figure 6 shows a schematic view of the inflating and deflating cycle of the floats of the generator according to figure 1.

### DETAILED DESCRIPTION OF A PREFERRED EMBODIMENT

As shown in the figures, the electromechanical generator according to the invention, designated in general by reference 1, is made up of a generating pool or pond 2 for containing water with a preset filling level N at the bottom of which is anchored a supporting bedplate 3 which has support bearings 30 whereon is supported a rotational shaft 4.

Mounted on the rotational shaft 4 is provided a rotor 5 of generally cylindrical configuration, on whose lateral surface are arranged, angularly equidistant from each other, a plurality of rotor arms 50 which extend radially with respect to said shaft.

At the free end of each rotor arm 50 is mounted at least a floating element 6 which can be inflated with compressed air and a first work cycle or inflating cycle is planned when said float 6 passes, submerged, below the filling level of the generating pool 2 and a second work cycle or deflating cycle while said float 6 passes above the aforementioned filling level N, all of this with the rotation of the shaft 4.

For the inflating/deflating of the respective floats, a pneumatic circuit 7 is provided which includes a system of ducts 70, 71 for injecting/extracting compressed air, electrovalves 72, 73 for controlling the injection/extraction of compressed air, at least a first pneumatic compressor 74 for injecting compressed air through reserve compressed air tanks 75, 76 and a second compressor group 75, connected to the aforementioned reserve tanks to extract the compressed air injected into the floats.

To govern the operation of the pneumatic circuit 7, timing means 8 are provided to govern the opening/closing of the electrovalves 72, 73 and the first and second pneumatic compressors 74, 77 during the aforementioned inflating and deflating cycles of the floats 6.

Additionally, a power device 9 is provided, in the form of a transfer case, coupled to the rotational shaft 4 through a transmission box 10, such as a pulley box and a multiplication device 11. The power device 9 is provided with kinetic outlets 90, 91, 92 which are respectively connected to the first and second compressor groups 74, 77 and to an electric alternator 12, which can be used to supply the compressors with compressed air and also to supply electrical energy to other consumers.

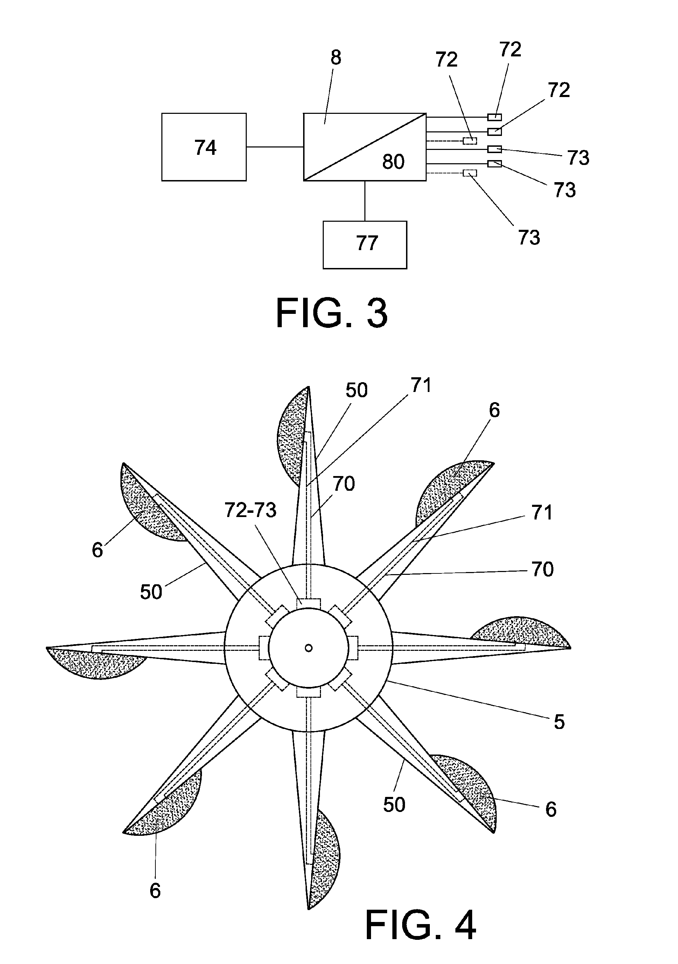

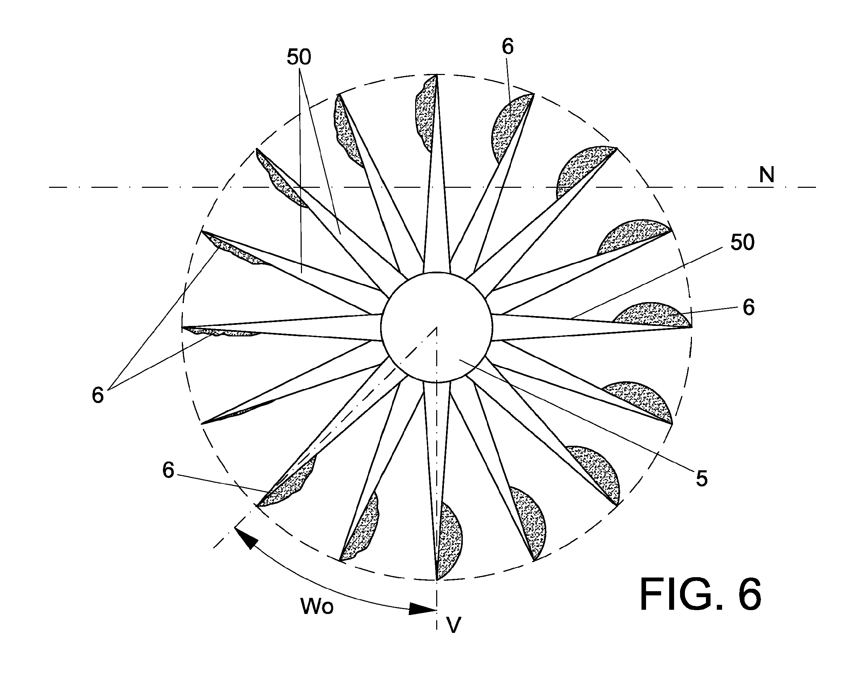

As can be observed via figure 3, the means 8 for controlling the inflating/deflating of the floats 6, include means for determining the position 80 to establish the position of the floating elements 6 in relation to the filling level of the reaction pool 2. In this way, as shown in figure 6, it is possible to adjust the initiation of the first work cycle or air injection cycle for inflating a respective floating element when said floating element is submerged, occupying a specific angle W with respect to the vertical line V of the bottom of the generating pool 2 and completing it with a total inflation when said floating element reaches the proximity of said vertical line during its rotation, and also so that it is possible to adjust the initiation of the second work cycle or deflating cycle when a respective floating element 6 emerges through the filling line during its rotation and finishing it when said floating element begins to become submerged once again beneath the filling level during its rotation.

As can also be observed in figure 6, it can be provided with two or more rows of rotor arms 50 on the rotor 5, with the adjacent double-rowed rotor arms being displaced angularly between each other.

As will be easily understood by persons skilled in the art, the above description is merely illustrative of a preferred mode of embodiment of the invention, so technical modifications of all kinds are possible.

The object of the invention having been sufficiently described, it is only left to be pointed out that embodiments derived from shape, dimensions and such like, as well as those resulting from an application of that previously revealed, must be considered included within its field, so that the invention shall only be limited by the scope of the following claims.

## Claims

1. Electromagnetic generator (1) for use of flotation energy, said generator (1) **characterised in that** it comprises:
- a generation pool or pond (2) to contain water with a preset filling level (N);
- a supporting bedplate (3) anchored to the bottom of the generating pool which has support bearings (30) for a rotational shaft (4);
- a rotor (5) of generally cylindrical configuration, mounted to rotate with the rotational shaft and on whose lateral surface are arranged, angularly equidistant, a plurality of rotor arms (50) which are extended radially with respect to said shaft and on the free end of each one of these arms is mounted, at least, a floating element (6) which can be inflated with compressed air during a first work cycle or inflating cycle when said float passes, submerged, below the filling level of the generating pool and can be deflated during a second work cycle or deflating cycle while said float passes above the aforementioned filling level, all of this with the rotation of the shaft;
- a pneumatic circuit (7) for inflating and deflating the respective floating elements which include a system of ducts (70, 71) for injecting/extracting compressed air, electrovalves (72, 73) for controlling the injection/extraction of compressed air, at least a first pneumatic compressor (74) for injecting compressed air through reserve compressed air tanks (75, 76) and a second compressor group (77) connected to the reserve tanks to extract the compressed air injected into the floats;
- timing means (8) to govern the opening/closing of the electrovalves (72, 73) and the first and second pneumatic compressors (74, 77) during the aforementioned inflating and deflating cycles of the floats;
- a power device (9), in the form of a transfer case, coupled to the rotational shaft through a transmission box (10), such as a pulley box and a multiplication device (11), said power device having respective kinetic outlets (90, 91, 92) respectively connected to the first and second compressor groups and to an electric alternator (12).

2. Electromagnetic generator for use of flotation energy according to claim 1, **characterised in that** the control means (8) include means for determining the position (80) to calculate the position of the floating elements (6) in relation to the filling level (N) of the reaction pool (2) so that it is possible to adjust the initiation of the first work cycle or air injection cycle for inflating a respective floating element (6) when said floating element is submerged, occupying a specific angle (W) with respect to the vertical line (V) of the bottom of the generating pool (2) and completing it with a total inflation when said floating element reaches the proximity of said vertical line during its rotation, and also so that it is possible to adjust the initiation of the second work cycle or deflating cycle when a respective floating element (6) emerges through the filling line during its rotation and finishing it when said floating element begins to become submerged once again beneath the filling level during its rotation.

3. Electromagnetic generator for use of flotation energy according to claim 2, **characterised in that** the angle (W) with respect to the vertical line (V) of the bottom of the generating pool (2) wherein the inflating cycle of a respective floating element (6) begins is chosen with a preferred value of between 15° and 30°.

4. Electromagnetic generator for use of flotation energy according to the previous claims, **characterised in that** two or more rows of rotor arms (50) are provided on the lateral surface of the rotor (5), with the adjacent double-rowed rotor arms displaced angularly between each other.
